(19) Europäisches Patentamt / European Patent Office / Office européen des brevets

(11) **EP 1 554 549 B1**

(12) **EUROPÄISCHE PATENTSCHRIFT**

(45) Veröffentlichungstag und Bekanntmachung des Hinweises auf die Patenterteilung:
**07.09.2016 Patentblatt 2016/36**

(21) Anmeldenummer: **03757979.4**

(22) Anmeldetag: **15.10.2003**

(51) Int Cl.:
***G01F 1/66*** *(2006.01)*

(86) Internationale Anmeldenummer:
**PCT/EP2003/011399**

(87) Internationale Veröffentlichungsnummer:
**WO 2004/036151 (29.04.2004 Gazette 2004/18)**

(54) **DURCHFLUSSMESSGERÄT**

FLOWMETER

DÉBITMÈTRE

(84) Benannte Vertragsstaaten:
**AT BE BG CH CY CZ DE DK EE ES FI FR GB GR HU IE IT LI LU MC NL PT RO SE SI SK TR**

(30) Priorität: **17.10.2002 DE 10248593**

(43) Veröffentlichungstag der Anmeldung:
**20.07.2005 Patentblatt 2005/29**

(73) Patentinhaber: **Endress + Hauser Flowtec AG**
**4153 Reinach BL 1 (CH)**

(72) Erfinder:
• **FRÖHLICH, Thomas**
**CH-4058 Basel (CH)**
• **STRUNZ, Torsten**
**CH-4056 Basel (CH)**

• **WIEST, Achim**
**79576 Weil am Rhein (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
| | |
|---|---|
| EP-A- 0 273 385 | EP-A- 0 363 156 |
| DE-A- 19 722 140 | DE-A1- 3 941 544 |
| US-A- 4 098 117 | US-A- 4 162 630 |
| US-A- 4 462 261 | US-A- 5 179 862 |
| US-A- 5 460 047 | US-A- 5 623 930 |
| US-B1- 6 405 603 | |

**Beschreibung**

Die Erfindung bezieht sich auf ein Durchflußmeßgerät mit zumindest zwei Ultraschallwandlern und einer Regel-/Auswerteeinheit. Die Ultraschallwandler sind an einem Behältnis angebracht, das von einem Medium in einer Strömungsrichtung durchströmt wird. Anhand der Laufzeitdifferenz der Meß-signale, die sich in Strömungsrichtung und entgegen der Strömungsrichtung des Mediums ausbreiten, ermittelt die Regel-/Auswerteeinheit den Volumen-durchfluß des Mediums in dem Behältnis.

Ultraschall-Durchflußmeßgeräte der zuvor beschriebenen Art, die den Volumendurchfluß mittels der sog. Laufzeitdifferenz-Methode ermitteln, werden vielfach in der Prozeß- und Automatisierungstechnik eingesetzt. Sie erlauben es, den Volumendurchfluß in einem Behältnis, z.B. in einer Rohrleitung, berührungslos zu bestimmen.

Unterschieden wird zwischen Ultraschall-Durchflußmeßaufnehmern, die in die Rohrleitung eingesetzt werden, und Clamp-On Durchflußmeßgeräten, bei denen die Ultraschallwandler von außen an das Leitungsrohr mittels eines Spannverschlusses angepreßt werden. Clamp-On Durchflußmeßgeräte sind beispielsweise in der EP 0 686 255 B1. der US-PS 4,484,478 oder der US-PS 4,598,593 beschrieben.

US 6405603 B1 zeigt ein weiteres Clamp-On-Ultraschalldurchflussmessgerät, in welchem die Aufspaltung eines von einem Ultraschallwandler in ein Rohr eingestrahlten Ultraschallsignals in zwei Signale beschrieben wird. Ein erstes Signal wandert in der Rohrwand zum Ultraschallempfänger, ein zweites Signal durchläuft das Medium des Rohrs, bevor es den Ultraschallempfänger erreicht. Der Vergleich der Signalamplituden beider Signale wird für die Messung des Einflusses des Mediums auf die Amplitude des zweiten Signals verwendet, wodurch Rückschlüsse auf Gasglasen im Medium durchgeführt werden können.

DE 3941544 A1 beschreibt ein Ultraschallgasdurchflussmessgerät, welches zur Messung eines Gasdurchflusses einen W-förmigen Ultraschallpfad wählt, so dass ein von einem ersten einstrahlenden Ultraschallwandler eingestrahltes Ultraschallsignal drei Mal an einer Rohrinnenwand eines Messrohrs reflektiert wird, bis es einen zweiten empfangenden Ultraschallwandler erreicht. Auf diese Weise wird das Medium im Messrohr fünf mal gekreuzt. Um einen weiters möglichen V-förmigen Schallpfad vom ersten Ultraschallwandler zum zweiten Ultraschallwandler mit einer Rohrinnenwandreflektion zu unterdrücken, wird im Bereich der Reflektionsstelle des V-förmigen Ultraschallpfads ein Element zur Einrichtung destruktiver Interferenz eingesetzt, um die Signalamplitude des über den V-förmigen Pfad laufenden Ultraschallsignals weitgehend zu unterdrücken.

Bei beiden Typen von Ultraschall-Durchflußmeßgeräten werden die Ultraschall-Meßsignale unter einem vorgegebenen Winkel in das Behältnis, in dem sich das Medium befindet, eingestrahlt. Bei Ultraschall-Durchflußmeßauf-nehmern ist die jeweilige Position der Ultraschallwandler am Meßrohr abhängig von dem Innendurchmesser des Meßrohres und von der Schallge-schwindigkeit des Mediums. Da der Innendurchmesser des Meßrohres von der Fertigung her bekannt ist, verbleibt - je nach Applikationsfall - höchstens die Schallgeschwindigkeit des Mediums als nur näherungsweise bekannter Parameter.

Bei Clamp-On Durchflußmeßgeräten kommen als weitere Applikations-parameter, denen mitunter ein relativ großer Fehler anhaftet, die Wandstärke der Rohrleitung und die Schallgeschwindigkeit des Materials der Rohrleitung hinzu.

Je nach Applikationsfall tritt bei Clamp-On Durchflußmeßgeräten noch eine weitere Fehlerquelle auf. Ein Ultraschallwandler, der bei einem Clamp-On Durchflußmeßgerät eingesetzt wird, weist zumindest ein die Ultraschall-Meßsignale erzeugendes piezoelektrisches Element und einen Koppelkeil auf. Dieser Koppelkeil ist üblicherweise aus Kunststoff gefertigt und dient einer-seits der Impedanzanpassung und andererseits dem Schutz des piezo-elektrischen Elements.

Die in einem piezoelektrischen Element erzeugten Ultraschall-Meßsignale werden über den Koppelkeil bzw. einen Vorlaufkörper und die Rohrwand in das flüssige Medium geleitet. Da die Schallgeschwindigkeiten in einer Flüssigkeit und in Kunststoff voneinander verschieden sind, werden die Ultraschallwellen beim Übergang von einem Medium in das andere gebrochen. Der Brechungswinkel selbst bestimmt sich nach dem Snellius Gesetz, d.h der Brechungswinkel ist abhängig von dem Verhältnis der Ausbreitungsgeschwindigkeiten der beiden Medien.

Mit Koppelkeilen bzw. Vorlaufkörpern aus Kunststoff läßt sich i.a. eine gute Impedanzanpassung erzielen; allerdings zeigt die Schallgeschwindigkeit von Kunststoff eine relativ starke Tempraturabhängigkeit. Typischerweise verändert sich die Schallge-schwindigkeit von Kunststoff von ca. 2500 m/s bei 25° C auf ca. 2200 m/s bei 130° C. Zusätzlich zu der durch die Temperatur hervorgerufenen Änderung der Laufzeit der Ultraschall-Meßsignale im Kunststoff des Koppelkeils, ändert sich auch die Ausbreitungsrichtung der Ultraschall-Meßsignale in dem strömenden Medium. Beide Änderungen wirken sich bei einem nach der Laufzeitdifferenz-Methode arbeitenden Ultraschall-Durchflußmeßgerät daher ungünstig auf die Meßgenauigkeit aus.

Die Winkelpositionierung der Ultraschallwandler ist bei den bekannten Durchflußmeßgeräten fest vorgegeben. Zwecks Erstmontage oder im Falle späterer Applikationsänderungen ist es aufgrund des Zuvorgesagten erforderlich, den Abstand der beiden Ultraschallwandler definiert aufeinander einzustellen. Hierzu wird üblicherweise einer der beiden Ultraschallwandler solange relativ zum anderen verschoben, bis die Position ermittelt ist, in der die Intensität der von den Ultraschallwandlern empfangenen Meßsignale maximal ist. Nachdem der optimale Abstand der beiden Ultraschall-wandler auf diesem 'Trial/Error' Weg ermittelt ist, werden die beiden Ultraschallwandler in der ermittelten Position fest an der Rohrwand arretiert. Dieses Verfahren ist natürlich relativ zeitintensiv.

Hinzu kommt, daß einige der Applikationsparameter, die insbesondere bei einem Clamp-On Durchflußmeßgerät zur exakten Bestimmung des Volumen-durchflusses notwendig sind, in den seltensten Fällen genau genug bekannt sind; oder aber die Ermittlung dieser Parameter ist ziemlich aufwendig. Während die Bestimmung des Außendurchmessers der Rohrleitung kaum Probleme bereitet, kann die exakte Ermittlung der Wandstärke der Rohrleitung durchaus problematisch sein. In vielen Fällen ist darüber hinaus weder die Schallgeschwindigkeit des Materials der Rohrleitung noch die Schallge-schwindigkeit des Mediums exakt bekannt.

Der Erfindung liegt die Aufgabe zugrunde, eine kostengünstige Vorrichtung zur hochgenauen Bestimmung und/oder Überwachung des Volumendurch-flusses in einem Behältnis vorzuschlagen.

Die Aufgabe wird dadurch gelöst, daß die Ultraschallwandler so ausgebildet sind, daß sie Meßsignale bzw. Schallfelder mit einem großen Öffnungswinkel aussenden und empfangen. Aufgrund der räumlich ausgedehnten Abstrahl-bzw. Empfangscharakteristik werden die Ultraschall-Meßsignale in einen weiten Winkelbereich eingestrahlt bzw. aus einem weiten Winkelbereich empfangen. Kurz gesagt, findet eine definierte, gewünschte Strahlaufweitung statt. Hierdurch ist der Ort der Montage der Ultraschallwandler weitgehend unabhängig von dem Durchmesser der Rohrleitung und von der Schallgeschwindigkeit des in der Rohrleitung strömenden Medium.

Allgemein läßt sich sagen, daß gemäß einer vorteilhaften Ausgestaltung der erfindungsgemäßen Vorrichtung die beiden Ultraschallwandler in einem definierten Abstand voneinander angeordnet sind, wobei der Abstand der beiden Ultraschallwandler nur von dem Öffnungswinkel der Meßsignale bzw. der Schallfelder abhängig ist; der Abstand der beiden Ultraschallwandler ist hingegen unabhängig von anderweitigen System- und/oder Prozeßgrößen. Bei diesen für eine hohe Meßgenauigkeit wichtigen System- und Prozeß-größen handelt es sich - wie bereits an vorhergehender Stelle erwähnt - um die Schallgeschwindigkeit des Mediums, um die Schallgeschwindigkeit des Materials der Rohrleitung, um die Wandstärke der Rohrleitung oder um den Innendurchmesser der Rohrleitung.

Bevorzugt handelt es sich bei dem Durchflußmeßgerät um ein Clamp-On Durchflußmeßgerät.

Der zur Bestimmung und/oder Überwachung des Volumendurchflusses des Mediums in der Rohrleitung verwendete Schallpfad ist (in Strömungsrichtung und entgegen der Strömungsrichtung) vorgegeben durch den Ort der Ultraschallwandler an der Rohrleitung und nicht duch die Abstrahlrichtung der Ultraschallwandler. Damit ist die Erstmontage des erfindungsgemäßen Clamp-On Durchfluß-meßgeräts natürlich gegenüber den aus dem Stand der Technik bekannt gewordenen Lösungen erheblich vereinfacht. Desweiteren erübrigen sich auch allfällige Nachjustierungen, die bei den bekannten Lösungen bislang notwendig waren, sobald Prozeß- oder Systemveränderungen aufgetreten sind.

Eine besonders kostengünstige Ausgestaltung der erfindungsgemäßen Vorrichtung sieht vor, daß es sich bei einem piezoelektrischen Element, das in einem Ultraschallwandler eingesetzt wird, um ein scheibenförmiges piezo-elektrisches Element handelt. Ein z.B. kreisscheibenförmiges piezo-elektrisches Element hat einen intrinsischen Öff-nungswinkel $\gamma$, der durch die folgende mathematische Formel definiert ist: $\sin(\gamma) = 1.22\ \lambda/D$, wobei $\lambda$ die Wellenlänge der Ultraschall-Meßsignale im Medium und D den Durchmesser des kreisscheibenförmigen piezoelektrischen Elements kennzeichnet. Somit läßt sich beispielsweise über den Durchmesser eines piezoelektrischen Elements eine gewünschte Strahlaufweitung erreichen. Eine zusätzliche oder alternative Defokussierung und damit Strahlaufweitung wird dadurch erreicht, daß eine akustische Streulinse eingesetzt wird. Alternativ kann eine akustische Linse verwendet werden, wobei darauf geachtet werden muß, daß die Ultraschall-Meßsignale nicht im Fokus der Linse in die Rohrleitung eingestrahlt bzw. aus der Rohrleitung empfangen werden.

Gemäß einer vorteilhaften alternativen Ausgestaltung von Ultraschallwandlern mit einer breiten Abstrahl- bzw. Empfangscharakteristik sind mehrere piezoelektrischen Elementen als Sende-und/oder Empfangselemente vorgesehen sind, wobei die Sende- und/oder Empfangselemente in einem Array angeordnet sind. Jede gewünschte Abstrahl- bzw. Empfangs-charakteristik bzw. Strahlaufweitung läßt sich über eine entsprechende elektronische Ansteuerung der einzelnen piezoelektrischen Elemente realisieren. Insbesondere steuert die Regel-/Auswerteeinheit die piezo-elektrischen Elemente in dem Array an, wodurch letzlich jede gewünschte Strahlaufweitung realisierbar ist. Derartige Arrays sind als Phasen-Piezo-Arrays käuflich zu erwerben und werden in der Medizintechnik und in der Werkstoffprüfung eingesetzt.

Gemäß einer bevorzugten Weiterbildung der erfindungsgemäßen Vorrichtung ist der Mindestabstand der beiden Ultraschallwandler so bemessen ist, daß sich die Meßsignale, die wechselweise von den beiden Ultraschallwandlern ausgesendet und empfangen werden, über jeweils zumindest einen Schallpfad in dem vom Medium durchströmten Behältnis ausbreiten.

Ein großer Vorteil der erfindungsgemäßen Vorrichtung ist darin zu sehen, daß die relative Positon der beiden Ultraschallwandlern schon bei der Herstellung des Clamp-On Durchflußmeßgeräts fest vorgegeben sein kann. Da das Gerät nur noch an der Rohrleitung befestigt werden muß, entfallen die bislang notwendigen Justierungen und die relativ teuere Montagehilfe. Damit ist es auch erstmals möglich, daß ein Monteuer ohne spezielle elektrische Fachkenntnisse das erfindungsgemäße Clamp-On Durchflußmeßgerät in Betrieb nehmen kann. Hierdurch wird Zeit und Geld eingespart.

Um ein erhöhtes Maß an Meßsicherheit zu erreichen, sieht eine vorteilhafte Ausgestaltung der erfindungsgemäßen Vorrichtung vor, daß der Mindestab-stand der beiden Ultraschallwandler und der Öffnungswinkel der Meßsignale bzw. der Schallfelder so bemessen sind, daß sich die Meßsignale über zumindest zwei Schallpfade ausbreiten, wobei sich die beiden Schallpfade in der Anzahl der Traversen unterscheiden. Eine Traverse definiert übrigens den Teilbereich eines Schallpfades, auf dem ein Meßsignal den Behälter einmal quert.

Die zuvorgenannte Ausgestaltung eröffnet darüber hinaus noch weitere äußerst vorteilhafte Möglichkeiten. An vorhergehender Stelle wurde bereits darauf hingewiesen, daß es je nach Applikationsfall schwierig ist, den exakten Wert jeder einzelnen Prozeß- und Systemgröße zu ermitteln. Man behilft sich, indem üblicherweise Schätzwerte in die Berechnungen einfließen - eine Methode, die qulitativ hochwertigen Meßergebnissen nicht notwendigerweise angemessen ist. Alternativ werden die Applikationsparameter bzw. die Prozeß- und Systemgrößen auf aufwendige Art und Weise ermittelt.

Für dieses Problem stellt eine Ausführungsform der erfindungsgemäßen Vorrichtung eine sehr zuverlässige und einfache Lösung bereit: Die Regel-/Auswerteeinheit errechnet anhand der Laufzeit der Meßsignale, die sich in Strömungsrichtung und entgegen der Strömungsrichtung in dem vom Medium durchströmten Behältnis auf zumindest zwei unterschiedlichen Schallpfaden ausbreiten, zumindest eine der System- oder Prozeßgrößen, die zur Bestimmung des Volumenstroms des Mediums in dem Behältnis erforderlich ist.

Die Erfindung wird anhand der nachfolgenden Zeichnungen näher erläutert.

Es zeigt:

Fig. 1: eine schematische Darstellung einer bevorzugten Ausführungsform der erfindungsgemäßen Vorrichtung und

Fig. 2: einen Grapfen, der die Abhängigkeit der Amplitude der Ultraschall-Meßsignale aus Fig. 1 in Abhängigkeit von der Laufzeit wiedergibt.

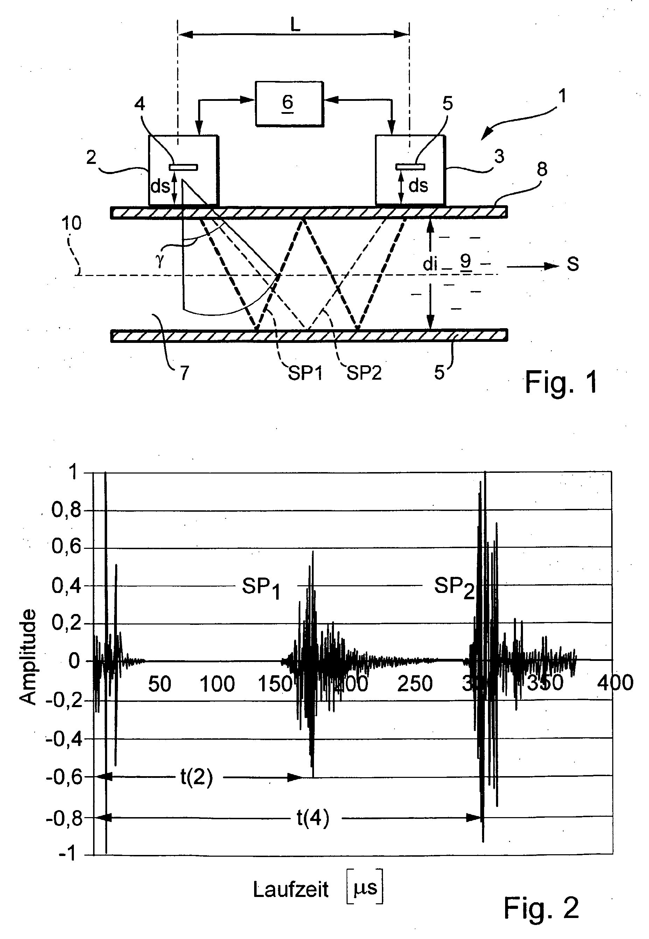

Fig. 1 zeigt eine schematische Darstellung einer bevorzugten Ausführungs-form des erfindungsgemäßen Ultraschall-Durchflußmeßgerätes 1. Bei dem Meßgeät 1 handelt es sich im gezeigten Fall um ein Clamp-On Durchflußmeßgerät. Das Meßgerät 1 ermittelt den Volumendurchfluß des Mediums 9 in dem Rohr 7 nach der bekannten Laufzeitdifferenz-Methode.

Wesentliche Komponenten des Clamp-On Ultraschall-Durchflußmeßgerätes 1 sind die beiden Ultraschallwandler 2, 3 und die Regel-/Auswerteeinheit 6. Die beiden Ultraschallwandler 2, 3 sind mittels einer in der Fig. 1 nicht gesondert dargestellten Befestigungsvorrichtung an dem Rohr 7 angebracht. Entsprechende Befestigungsvorrichtungen sind aus dem Stand der Technik hinlänglich bekannt und werden auch von der Anmelderin angeboten und vertrieben. Das Rohr 7 mit dem Innendurchmesser $di$ wird von dem Medium 9 in Strömungsrichtung S durchströmt.

Ein Ultraschallwandler 2; 3 weist als wesentliche Bestandteile zumindest ein piezoelektrisches Element 4, 5, das die Ultraschall-Meßsignale erzeugt und/oder empfängt, und einen Koppelkeil auf. Die Ultraschall-Meßsignale werden über den Koppelkeil in das vom Medium 9 durchströmte Rohr 7 eingekoppelt bzw. aus dem Rohr 7 ausgekoppelt.

Die beiden Ultraschallwandler 2, 3 sind derart ausgestaltet, daß sie Ultra-schall-Meßsignale bzw. Schallfelder mit einem großen Öffnungswinkel $\gamma$ bzw. mit einer großen Strahlaufweitung aussenden und empfangen. Der Abstand $L$ der beiden Ultraschallwandler 2, 3 ist daher nur abhängig von dem - im Prinzigp beliebig konfigurierbaren - Öffnungswinkel $\gamma$ der Ultraschall-Meß-signale bzw. der Schallfelder. Damit kann der Abstand $L$ der beiden Ultraschallwandler 2, 3 ggf. schon bei der Fertigung fest eingestellt werden, da er unabhängig von anderweitigen System- und/oder Prozeßgrößen ist. Bei diesen System- und Prozeßgrößen handelt es sich beispielswesie um den Innendurchmesser $di$ des Rohres 7, um die Wandstärke $w$ des Rohres 7, um die Schallgeschwindigkeit $cr$ des Materials, aus dem das Rohr 7 gefertigt ist, oder um die Schallgeschwindigkeit $c$ des Mediums 9. Hierdurch wird der Installationsaufwand erheblich reduziert; spätere Nachjustierungen aufgrund von Prozeß- und/oder Systemänderungen sind überflüssig.

Erfindungsgemäß kann der Mindestabstand $Lmin$ der beiden Ultraschall-wandler 2, 3 so bemessen sein, daß sich die Ultraschall-Meßsignale, die entsprechend der Laufzeitdifferenz-Methode wechselweise von den beiden Ultraschallwandlern 2, 3 ausgesendet und empfangen werden, über nur einen einen Schallpfad SP1; SP2 in dem vom Medium 9 durchströmten Behältnis 7 ausbreiten.

In Fig. 1 ist die bevorzugte Ausgstaltung der erfindungsgemäßen Vorrichtung zu sehen, bei der der Mindestabstand $Lmin$ der beiden Ultraschallwandler 2, 3 und der Öffnungswinkel $\gamma$ der Ultraschall-Meßsignale bzw. der Schallfelder so bemessen sind, daß sich die Ultraschall-Meßsignale über zumindest zwei Schallpfade SP1, SP2 ausbreiten, wobei sich beide Schallpfade SP1, Sp2 in der Anzahl ihrer Traversen unterscheiden. Eine Traverse kennzeichnet übrigens den Teilbereich eines Schallpfades SP1; SP2, auf dem ein Ultra-schall-Meßsignal den Behälter 7 einmal quert.

In dem in Fig. 2 dargestellten Graphen ist die Amplitude der Ultraschall-Meßsignale, die sich auf den beiden Schallpfaden SP1, SP2 der Fig. 1 ausbreiten, gegen die Laufzeit aufgetragen. Anhand der Laufzeitdifferenz der beiden Ultraschall-Meßsignale ermittelt die Regel-/Auswerteeinheit 6 einerseits den gewünschten Volumendurchfluß des Mediums 9 durch das Rohr 7; andererseits kann sie anhand der errechneten Werte weitere Applikationsparameter bestimmen. Insbesondere handelt es sich hierbei um Applikationsparameter, bei deren Bestimmung üblicherweise auf Schätzwerte zurückgegriffen wird, da deren exakte Ermittlung mit zu hohem Aufwand verbunden wäre. Bei der erfindungsgemäßen Anordnung der Ultraschall-wandler 2, 3 ist es möglich, System- und Prozeßparameter mit einer gewünschten hohen Genauigkeit anhand der Laufzeit der Meßsignale, die sich auf zwei verschiedenen Schallpfaden SP1, SP2 ausbreiten, zu errechnen.

Nachfolgend ist anhand eines mathematischen Modells eine Möglichkeit dargestellt, wie sich unbekannte Applikationsparameter anhand von Ultraschall-Meßsignalen, die auf zwei unterschiedlichen Schallpfaden SP1, SP2 mit einer unterschiedlichen Anzahl von Traversen n (siehe Fig. 1) in dem Medium 9 propagieren, errechnen lassen.

Die gemessene Laufzeit eines Schallpfades SP1; SP2 mit n Traversen sei t(n). Applikationsparameter sind die Rohrwandstärke w, die Schallge-schwindigkeit im Rohr cr, der Innendurchmesser di des Rohres 7 und die Schallgeschwindigkeit c des Mediums 9. Die Distanz eines piezoelektrischen Elementes 2, 3 zur Rohrwand ds, der Abstand L und die Schallgeschwindigkeit cs im Vorlaufkörper 2; 3 sind bekannte Größen.

Seien $\alpha(n)$, $\alpha r(n)$ und $\alpha s(n)$ die zunächst unbekannten Winkel eines Schallpfades SP1; SP2 im Medium 9, im Rohr 7 und im Ultraschallwandler 2, 3. Für diese gilt das Snellius Gesetz. Der Einfachheit halber ist der Index n bei der Gleichung weggelassen. Dann lauten die Gleichungen:

$$\frac{\sin(\alpha)}{c} = \frac{\sin(\alpha s)}{cs} \qquad (1)$$

und

$$\frac{\sin(\alpha)}{c} = \frac{\sin(\alpha r)}{cr} \qquad (2)$$

Folgendes Modell kann für die Laufzeiten angesetzt werden:

$$t(n) = ts(n) + tr(n) + tm(n) \qquad (3),$$

wobei $tr(n) = \dfrac{2w}{cr\cos(\alpha r)}$ die Laufzeit im Rohr, $ts(n) = \dfrac{2ds}{cs * \cos(\alpha s)}$ die Laufzeit im Ultraschallwandler 2,3 und

$tm(n) = \dfrac{n * di}{c\cos(\alpha)}$ die Laufzeit im Medium 9 ist.

Weiter gilt:

$$L = Ls(n) + Lr(n) + Lm(n) \qquad (4),$$

mit den Strecken $Ls(n) = 2ds \tan(\alpha s)$ im Ultraschallwandler 2, 3,

$Lr(n) = 2w\tan(\alpha r)$ im Rohr 7 und

$Lm(n) = n * di \tan(\alpha)$ im Medium 9 entlang der Rohrachse 10.

Damit ergeben sich für jeden Schallpfad SP1, SP2 vier Gleichungen (1) - (4) für drei unbekannte Winkel. Pro gemessener Laufzeit kann also das Gleichungssystem (ggf. numerisch) nach einem zusätzlichen Applikations-parameter aufgelöst werden. Bei einem Schallstrahl beispielsweise nach c, wenn alle anderen Applikationsparameter bekannt sind. Wird - wie in Fig. 1 und Fig. 2 dargestellt - t(2) und t(4) gemessen, so können die Gleichungen bei bekannten w und cr nach c und di aufgelöst werden.

Das Modell läßt sich vereinfachen, indem man sowohl die Laufzeiten als auch die Laufstrecken im Ultraschall-wandler 2; 3 und im Rohr 7 in den Gleichungen (3) und (4) approximativ behandelt. Dann gelten z.B. die folgende Beziehungen

$$Lr(n) \cong 0 \text{ und } Ls(n) \cong 0 \,.$$

In Nährung können die beiden Gleichungen (1) und (2) unberücksichtigt bleiben, wobei diese Approximation für große Innendurchmesser $di$ des Rohres 7 durchaus gerechtfertigt.

Anhand der Messungen sind die Laufzeiten im Medium $tm(n)$ mit Gleichung (3) bekannt, und es gilt:

$$L^2 = n^2 di^2 \frac{\sin^2(\alpha(n))}{\cos^2(\alpha(n))} = n^2 di^2 \left(1 - \frac{1}{\cos^2(\alpha(n))}\right) = n^2 di^2 - tm^2(n)c^2 \,. \qquad (5)$$

Für Laufzeitmessungen mit zwei Traversen und vier Traversen kann nachfolgend die Schallgeschwindigkeit $c$ des Mediums 9 bzw. der Innendurchmesser $di$ des Rohrs 7 entsprechend den beiden nachfolgend genannten Gleichungen errechnet werden:

$$c = L \sqrt{\frac{3}{tm^2(4) - 4tm^2(2)}} \text{ und} \qquad (6)$$

$$di = \frac{L}{2} \sqrt{\frac{tm^2(4) - tm^2(2)}{tm^2(4) - 4tm^2(2)}} \,. \qquad (7)$$

**Bezugszeichenliste**

| | |
|---|---|
| 1 | Clamp-On Durchflußmeßgerät |
| 2 | Ultraschallwandler |
| 3 | Ultraschallwandler |
| 4 | Piezoelektrisches Element |
| 5 | Piezoelektrisches Element |
| 6 | Regel-/Auswerteeinheit |
| 7 | Behältnis / Rohrleitung / Rohr |
| 8 | Rohrwand |
| 9 | Medium |
| 10 | Rohrachse |

| | |
|---|---|
| $w$ | Wandstärke |
| $cr$ | Schallgeschwindigkeit des Rohrs 7 |
| $c$ | Schallgeschwindigkeit des Mediums 9 |
| $di$ | Innendurchmesser des Rohrs 7 |
| $L$ | Abstand der Ultraschallwandler 2, 3 |
| $Lmin$ | Mindestabstand der Ultraschallwandler 2, 3 |
| $\gamma$ | Öffnungswinkel |
| $tm(n)$ | Laufzeit im Medium 9 |
| $n$ | Anzahl der Traversen |
| $ds$ | Distanz des piezoelektrischen Elements 4, 5 zur Rohrwand 8 |
| SP1 | erster Schallpfad |
| SP2 | zweiter Schallpfad |

**Patentansprüche**

1. Clamp-On Durchflußmeßgerät zur Befestigung an einem Messrohr, das von einem Medium in Richtung der Rohrachse 10 durchströmt wird, mit zumindest zwei Ultraschallwandlern (2, 3), die auf einer zur Rohrachse parallelen Verbindungslinie an dem Messrohr angeordnet sind, wobei die Ultraschallwandler (2, 3) wechselweise Ultraschall-Meßsignale in Strömungsrichtung (S) und entgegen der Strömungsrichtung (S) aussenden und empfangen, und mit einer Regel-/Auswerteeinheit (6), die anhand der Laufzeitdifferenz der Ultraschall-Meßsignale, die sich in Strömungsrichtung (S) und entgegen der Strömungsrichtung (S) ausbreiten, den Volumendurchfluß des Mediums (9) in dem Messrohr (7) bestimmt und/oder überwacht,

   **dadurch gekennzeichnet,**

   **daß** die Ultraschallwandler (2, 3) so ausgebildet sind, daß sie Ultraschall-Meßsignale bzw. Schallfelder mit einem großen Öffnungswinkel (y) bzw. mit einer großen Strahlaufweitung aussenden und empfangen und

   **daß** die beiden Ultraschallwandler (2, 3) in einem definierten Abstand (L) voneinander angeordnet sind, wobei der Abstand (L) der beiden Ultraschallwandler (2, 3) nur von dem Öffnungswinkel ($\gamma$) der Ultraschall-Meßsignale bzw. der Schallfelder abhängig ist und wobei der Abstand (L) der beiden Ultraschallwandler (2, 3) unabhängig ist von anderweitigen System- und/oder Prozeßgrößen ($w$, $cr$, $c$, $di$), wobei der Mindestabstand ($Lmin$) der beiden Ultraschallwandler (2, 3) und der Öffnungswinkel ($\gamma$) der Ultraschall-Meßsignale bzw. der Schallfelder so bemessen sind, daß sich die Ultraschall-Meßsignale über zumindest zwei Schallpfade (SP1, SP2) ausbreiten, die sich in der Anzahl der Traversen ($n$) unterscheiden, wobei eine Traverse den Teilbereich eines Schallpfades SP1; SP2 beschreibt, auf dem ein Ultraschall-Meßsignal das Messrohr (7) einmal durchquert, wobei die Regel-/Auswerteeinheit (6) so ausgestaltet ist, dass sie anhand der Laufzeiten ($t(n)$) der Ultraschall- Meßsignale, die sich in Strömungsrichtung (S) und entgegen der Strömungs-richtung (S) in dem vom Medium (9) durchströmten Messrohr (7) auf zumindest zwei unterschiedlichen Schallpfaden (SP1, SP2) ausbreiten, zumindest eine der System- oder Prozeßgrößen ($w$, $cr$, $c$, $di$) errechnet, die zur Bestimmung des Volumendurchflusses des Mediums (9) in dem Messrohr (7) erforderlich ist, wobei es sich bei der zumindest einen System- oder Prozeßgröße um den Innendurchmesser ($di$) des Messrohrs (7), um die Wandstärke ($w$) des Messrohrs (7), um die Schallgeschwindigkeit ($cr$) des Materials, aus dem das Messrohr (7) gefertigt ist, oder um die Schallgeschwindigkeit ($c$) des Mediums (9) handelt.

2. Vorrichtung nach Anspruch 1,
   **dadurch gekennzeichnet,**
   **daß** jeder Ultraschallwandler (2, 3) zumindest ein piezoelektrisches Element (4, 5) als Sende- und/oder Empfangselement aufweist.

3. Vorrichtung nach Anspruch 2,
   **dadurch gekennzeichnet,**
   **daß** es sich bei dem piezoelektrischen Element (4, 5) um ein scheiben-förmiges piezoelektrisches Element handelt, dem eine akustische Steulinse oder eine akustische Linse zwecks Strahlaufweitung zugeordnet ist.

4. Vorrichtung nach Anspruch 2,
   **dadurch gekennzeichnet,**
   **daß** mehrere piezoelektrischen Elementen (4, 5) als Sende-und/oder Empfangselemente vorgesehen sind, wobei die Sende- und/oder Empfangselemente in einem Array angeordnet sind.

5. Vorrichtung nach Anspruch 4,
   **dadurch gekennzeichnet,**
   **daß** die Regel-/Auswerteeinheit (6) so ausgestaltet ist, dass sie die piezoelektrischen Elemente (4, 5) in dem Array so ansteuert, daß die vorgegebene Strahlaufweitung bzw. der gewünschte Öffnungswinkel ($\gamma$) erreicht wird.

**Claims**

1. Clamp-on flowmeter for securing to a measuring tube through which a medium flows in the direction of the tube axis (10), with at least two ultrasonic converters (2, 3) which are arranged on the measuring tube on a connection line running parallel to the tube axis, wherein said ultrasonic converters (2, 3) alternately emit and receive ultrasonic measuring signals in the flow direction (S) and against the flow direction (S), and with a control/evaluation unit (6) which determines and/or monitors the volume flow of the medium (9) in the measuring tube (7) on the basis of the transit time difference of the ultrasonic measuring signals that propagate in the direction of flow (S) and against the direction of flow (S),

**characterized in that**
the ultrasonic converters (2, 3) are designed in such a way that they send and receive ultrasonic measuring signals or sound fields with a large angle of aperture (γ) or with a large beam expansion, and
**in that** the two ultrasonic converters (2, 3) are arranged at a defined distance (L) from one another, wherein the distance (L) between the two ultrasonic converters (2, 3) depends exclusively on the angle of aperture (γ) of the ultrasonic measuring signals or the sound fields, and wherein the distance (L) between the two ultrasonic converters (2, 3) is independent of other system and/or process variables (*w, cr, c, di*), wherein the minimum distance (*Lmin*) between the two ultrasonic converters (2, 3) and the angle of aperture (γ) of the ultrasonic measuring signals and/or sound fields is such that the ultrasonic measuring signals prorogate over at least two sound paths (SP1, SP2) which differ in terms of the number of traverses (*n*), wherein a traverse describes the partial area of a sound path SP1; SP2 at which an ultrasonic measuring signal passes through the measuring tube (7) once, wherein the control/evaluation unit (6) is designed in such a way that it calculates at least one of the system or process variables (*w, cr, c, di*) on the basis of the transit times (*t(n)*) of the ultrasonic measuring signals that propagate in the direction of flow (S) and against the direction of flow (S) in the measuring tube (7) through which medium (9) flows on at least two different sound paths (SP1, SP2), said variable being required to determine the volume flow of the medium (9) in the measuring tube (7), wherein the at least one system or process variable is the internal diameter (*di*) of the measuring tube (7), the wall thickness (*w*) of the measuring tube (7), the sonic velocity (*cr*) of the material from which the measuring tube (7) is made or the sonic velocity (*c*) of the medium (9).

2. Apparatus as claimed in Claim 1,
   **characterized in that**
   every ultrasonic converter (2, 3) has at least one piezoelectric element (4, 5) as the transmission and/or reception element.

3. Apparatus as claimed in Claim 2,
   **characterized in that**
   the piezoelectric element (4, 5) is a discoid piezoelectric element which is assigned an acoustic diffusion lens or an acoustic lens for the purpose of beam enlargement.

4. Apparatus as claimed in Claim 2,
   **characterized in that**
   multiple piezoelectric elements (4, 5) are provided as transmission and/or reception elements, wherein the transmission and/or reception elements are arranged in an array.

5. Apparatus as claimed in Claim 4,
   **characterized in that**
   the control/evaluation unit (6) is designed in such a way that it controls the piezoelectric elements (4, 5) in the array in such a way that the prespecified beam enlargement and/or desired angle of aperture (γ) is achieved.

**Revendications**

1. Débitmètre clamp-on destiné à être fixé sur un tube de mesure, qui est parcouru par un produit en direction de l'axe de tube (10), avec au moins deux convertisseurs ultrasonores (2, 3) qui sont disposés sur une ligne de jonction avec le tube de mesure, parallèle à l'axe de tube, les convertisseurs ultrasonores (2, 3) émettant et recevant alternativement des signaux de mesure ultrasonores dans la direction d'écoulement (S) et dans la direction opposée à la direction d'écoulement (S) et avec une unité de régulation et d'exploitation (6), qui détermine et/ou surveille, au moyen de la différence des temps de propagation des signaux de mesure ultrasonores qui se propagent dans la direction d'écoulement (S) et dans la direction opposée de la direction d'écoulement (S), le débit volumique du produit (9) dans le tube de mesure (7),
   **caractérisé**
   **en ce que** les convertisseurs ultrasonores (2, 3) sont conçus de telle sorte à émettre et recevoir des signaux de mesure ultrasonores ou des champs sonores avec un grand angle d'ouverture (γ) ou avec un grand élargissement de faisceau,
   et
   **en ce que** les deux convertisseurs ultrasonores (2, 3) sont disposés l'un par rapport à l'autre à une distance (L) définie, la distance (L) des deux convertisseurs ultrasonores (2, 3) dépendant uniquement de l'angle d'ouverture (γ) des signaux de mesure ultrasonores ou des champs sonores, et la distance (L) des deux convertisseurs ultrasonores (2, 3) étant indépendante de toute autre grandeur système et/ou process (*w, cr, c, di*), la distance minimale (*Lmin*) des deux convertisseurs ultrasonores (2, 3) et l'angle d'ouverture (γ) des signaux de mesure ultrasonores ou des champs sonores étant dimensionnés de telle sorte que les signaux de mesure ultrasonores se propagent sur au moins deux trajectoires ultrasonores (SP1, SP2) qui se distinguent par le nombre de traverses (*n*), une traverse décrivant la zone partielle d'une trajectoire ultrasonore (SP1, SP2), au niveau de laquelle un signal de mesure ultrasonore traverse une fois le tube de mesure (7), débitmètre pour lequel l'unité de régulation / d'exploitation (6) est conçue de telle sorte qu'elle calcule au moins l'une des grandeurs système ou process (*w, cr, c, di*) au moyen des temps de propagation (*t(n)*) des signaux de mesure ultrasonores, qui se propagent dans la direction d'écoulement (S) et dans la direction opposée à la direction d'écoulement (S) dans le tube de mesure (7) parcouru par le produit, sur au moins deux trajectoires ultrasonores (SP1, SP2) différentes, laquelle grandeur est requise pour la détermination du débit volumique du produit (9) dans le tube de mesure (7), l'au moins une grandeur système ou process correspondant au diamètre intérieur (*di*) du tube de mesure (7), à l'épaisseur de paroi (*w*) du tube de mesure (7), à la vitesse du son (*cr*) du matériau à partir duquel le tube de mesure (7) est fabriqué, ou à la vitesse du son (c) du produit (9).

2. Dispositif selon la revendication 1,
   **caractérisé**
   **en ce que** chacun des convertisseurs ultrasonores (2, 3) comporte au moins un élément piézoélectrique (4, 5) en tant qu'élément d'émission et/ou de réception.

3. Dispositif selon la revendication 2,
   **caractérisé**
   **en ce qu'**il s'agit, concernant l'élément piézoélectrique (4, 5), d'un élément piézoélectrique auquel est attribué une lentille divergente ou une lentille acoustique à des fins d'élargissement du faisceau.

4. Dispositif selon la revendication 2,
   **caractérisé**
   **en ce que** sont prévus plusieurs éléments piézoélectriques (4, 5) en tant qu'éléments d'émission et/ou de réception, les éléments d'émission et/ou de réception étant disposés dans un réseau.

5. Dispositif selon la revendication 4,
   **caractérisé**
   **en ce que** l'unité de régulation / d'exploitation (6) est conçue afin qu'elle commande les éléments piézoélectriques (4, 5) au sein du réseau de telle sorte que l'élargissement prédéfini du faisceau ou l'angle d'ouverture (γ) souhaité soit atteint.

Fig. 1

Laufzeit [µs]

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0686255 B1
- US 4484478 A
- US 4598593 A
- US 6405603 B1
- DE 3941544 A1